# EUROPEAN PATENT SPECIFICATION

(11) **EP 2 397 615 B1**
(45) Date of publication and mention of the grant of the patent: **13.02.2019**
(21) Application number: 11169057.4
(22) Date of filing: 08.06.2011
(51) Int. Cl.: E03F 1/00, E02B 11/00, E03F 5/02

(54) **Infiltration and transport sewer**
Infiltrations- und Transportabwasserkanal
Égout d'inflitration et de transport

(30) Priority: 15.06.2010 NL 2004892
(43) Date of publication of application: 21.12.2011
(73) Proprietor: Henk van Tongeren Water & Techniek B.V., 7332 BE Apeldoorn (NL); B.B.A. Participaties B.V., 7382 AJ Klarenbeek (NL)
(72) Inventor: Bruin, Johannes, 7325 WV Apeldoorn (NL); Van Tongeren, Gerrit Harold Berno, 8131 GL Wijhe (NL)
(74) Representative: Dokter, Hendrik Daniel

(56) References cited:
- EP-A2- 1 953 297
- WO-A1-2008/142879
- WO-A2-2006/042293
- AT-B- 347 864
- DE-U1- 29 508 211

## Description

The invention relates to an infiltration and transport sewer, comprising at least one horizontal conduit part provided with perforations and at least one vertical conduit part.

An infiltration and transport sewer, generally referred to with the abbreviation IT sewer, is a sewer separated from a wastewater sewer and intended and adapted solely for the purpose of draining rainwater. The IT sewer normally comprises a system of perforated horizontal conduits lying at a level of about three to four metres below ground level. The horizontal conduits are for instance connected to and are supplied from street or pavement gully holes arranged in or along a road. During rainfall the water collected in the street or pavement gully holes is drained via the horizontal conduits and guided into the ground via the perforations therein.

In the case of heavy rainfall the known IT sewer generally has too small a capacity to guide all the supplied water into the ground, and a part of the supplied water is discharged onto a surface water or nevertheless drained to a wastewater sewer via an overflow.

Overflow to a wastewater sewer is perceived as disadvantageous because water which is in principle quite clean is here added to wastewater which is contaminated and yet to be treated. Furthermore, the discharge of rainwater to a surface water and overflow to a wastewater sewer involve costs in the form of charges imposed by the responsible authority.

WO 2006/042293 A discloses a trench drain filter in which a horizontal perforated pipe is covered with one or more layers of geotextile material, which is, in turn, covered with a permeable fabric membrane.

DE 295 08211 U discloses an infiltration conduit for infiltrating water enriched with oxygen into a soil, in which conduit a horizontal conduit which has a non-perforated wall is connected via a pipe bend with a vertical perforated filter tube, in which an inlet conduit for oxygen is led into the horizontal conduit via the pipe bend.

EP 1 953 297 A2 discloses an assembly for collection and storing of water, comprising at least one half pipe having a corrugated exterior and a smooth interior.

WO 2008/142879 A discloses a pit for managing dust removal, comprising a bottomed upper pit connected with an inflow pipe, and a tubular lower vertical pit having an upper portion connected with the upper put and supplying water trickling from an opening at the upper end to a water storage tank.

It is an object of the invention to provide an IT sewer which has a high capacity such that even in the case of heavy rainfall the supplied water can be guided wholly, or at least substantially wholly, into the ground without it being necessary to discharge a part of the supplied water to a surface water or allow overflow to a wastewater sewer.

It must be possible to lay such an IT sewer in simple manner and at relatively low cost.

The IT sewer must also be compatible with existing IT sewers so that it can be installed as an extension to these existing sewers.

These objects are realized, and other advantages gained, with an infiltration and transport sewer according to claim 1.

The vertical conduit part brings within reach the possibility of infiltrating a second, deeper ground layer with water, for instance a ground layer separated from the first ground layer by a water-impermeable layer of clay or loam.

The vertical conduit part is for instance an infiltration pipe as known from devices for temporary drainage by well points, wherein the groundwater level is temporarily lowered at a determined location, for instance a building location, by pumping up groundwater which is guided back into the ground elsewhere a short distance from the location by means of a system of infiltration pipes.

In an embodiment of an IT sewer according to the invention the vertical conduit part is provided with an inlet part which is formed by an elongate sleeve which is at least partially provided with perforations and which can be coupled at a first end to the vertical conduit part.

The perforations in this sleeve function as a screen for the rainwater to be guided into the vertical conduit part, so that for instance leaf remnants or street refuse cannot enter the vertical conduit part.

In a practically advantageous embodiment of an inlet part which is easy to clean, a proximal part of the sleeve relative to the vertical conduit part is closed in peripheral direction.

In order to allow the nozzle of a suction hose to be lowered easily into the vertical conduit part during cleaning of the conduit part, the sleeve of an inlet part is preferably provided at a second end with a peripheral edge widening conically from the sleeve.

Such a peripheral edge then functions as funnel for the end part of a suction line to be inserted into the vertical conduit part.

In order to impart the necessary stiffness to the inlet part, in an embodiment the sleeve is provided in longitudinal direction with at least two, preferably four strengthening ribs extending between the first and the second end.

The sleeve of an inlet part is for instance manufactured from a plastic material, and preferably from stainless steel.

In a practically advantageous embodiment of a transport sewer according to the invention the inlet part is received in a reservoir into which the horizontal conduit part debouches, the reservoir being provided on its underside with a passage opening for the vertical conduit part.

The inlet part can be received in such a reservoir in easily accessible manner for inspection or cleaning, wherein one or more horizontal conduit parts debouch at a level above the inlet part.

The vertical conduit part comprises for instance a pipe manufactured from a metal or plastic and provided with perforations.

The invention also relates to an inlet part for a vertical conduit part for an above described infiltration and transport sewer, the inlet part comprising an elongate sleeve which is at least partially provided with perforations and which can be coupled at a first end to the vertical conduit part.

The invention further relates to an inspection well for an above described infiltration and transport sewer, the inspection well comprising a reservoir formed by a bottom and walls standing from this bottom, wherein a passage opening for a horizontal conduit part is provided in at least one of the walls, the inspection well being characterized by a passage opening in the bottom for a vertical conduit part.

Such an inspection well is manufactured from concrete or from a plastic material.

The invention further relates to the use of an infiltration and transport sewer disclosed above for transporting water and infiltrating a first ground layer with at least a first part of the water transported through the at least one horizontal conduit part, and for infiltrating a second ground layer located lower than the first ground layer with at least a second part of the water transported through the horizontal part.

The invention will be elucidated hereinbelow on the basis of exemplary embodiments, with reference to the drawings.

In the drawings
Fig. 1 is a cut-away perspective view of a part of an embodiment of an IT sewer according to the invention, and
Fig. 2 is a perspective view of a detail of the sewer shown in fig. 1.

Corresponding components are designated in the figures with the same reference numerals.

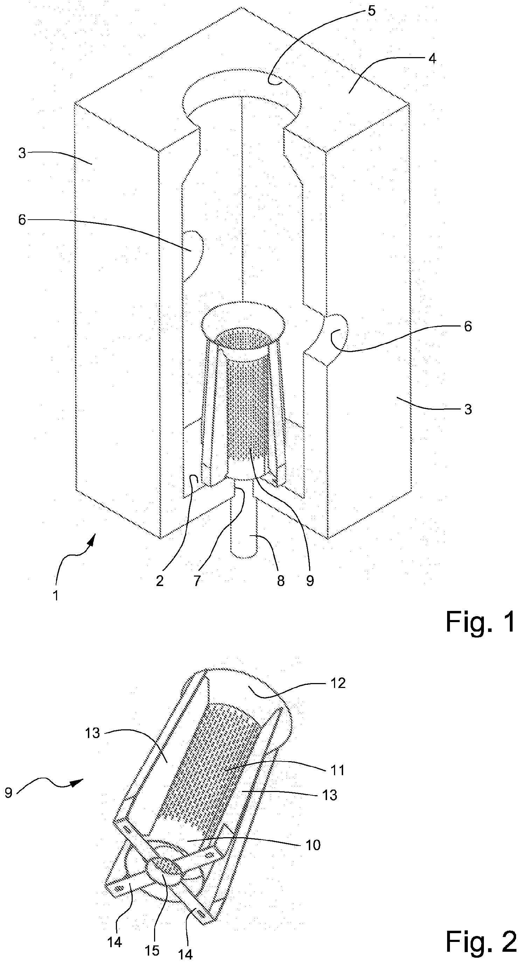

Fig. 1 shows an inspection well 1 for an infiltration and transport sewer comprising a concrete reservoir formed by a bottom 2, walls 3 standing from this bottom 2 and by an upper plate 4 with a manhole 5 which can be closed with a cover (not shown). Formed in two of the standing walls 3 is a passage opening 6 for a horizontal conduit part (not shown). Formed in bottom 2 is a passage opening 7 through which a (partially shown) vertical infiltration pipe 8 of for instance PVC or HDPE is guided. A stainless steel inlet part 9 is placed on the upper outer end of infiltration pipe 8.

Fig. 2 shows the inlet part 9 of fig. 1 in detail as seen from its underside, with a sleeve 10, of which the lower part, in this case the proximal part relative to the infiltration pipe, is closed in peripheral direction and otherwise provided with perforations 11. Sleeve 10 is provided on its upper end with a conically widening peripheral edge 12 which functions as funnel during insertion of a nozzle of a suction conduit to enable easy cleaning of inlet part 9 and infiltration pipe 8. Extending from peripheral edge 12 along sleeve 10 are four strengthening ribs which are coupled on their underside by a cross, of which the parts 14 are mutually coupled by a ring 15 which can be coupled to infiltration pipe 8.

## Claims

1. Infiltration and transport sewer, comprising at least one horizontal conduit part provided with perforations and at least one vertical conduit part (8), wherein the vertical conduit part (8) is provided with an inlet part (9) placed on the upper outer end of it, which inlet part (9) is formed by a vertically extending elongate sleeve (10) which can be coupled at its lower end to the vertical conduit part, **characterized in that** said vertically extending elongate sleeve (10) is as least partially provided with perforations (11).

2. Infiltration and transport sewer as claimed in claim 1, **characterized in that** a proximal part of the sleeve (10) relative to the vertical conduit part (8) is closed in peripheral direction.

3. Infiltration and transport sewer as claimed in any of the claims 1-2, **characterized in that** the sleeve (10) is provided at its upper end with a peripheral edge (12) widening conically from the sleeve (10).

4. Infiltration and transport sewer as claimed in any of the claims 1-3, **characterized in that** the sleeve (10) is provided in longitudinal direction with at least two strengthening ribs (13) extending between the first and the second end.

5. Infiltration and transport sewer as claimed in claim 4, **characterized in that** the sleeve (10) is provided in longitudinal direction with four strengthening ribs (13) extending between the first and the second end.

6. Infiltration and transport sewer as claimed in any of the claims 1-5, **characterized in that** the sleeve (10) is manufactured from a plastic material.

7. Infiltration and transport sewer as claimed in any of the claims 1-5, **characterized in that** the sleeve (10) is manufactured from stainless steel.

8. Infiltration and transport sewer as claimed in any of the claims 1-7, **characterized in that** the inlet part is received (9) in a reservoir (1) into which the horizontal conduit part debouches, the reservoir being provided on its underside (2) with a passage opening (7) for the vertical conduit part (8).

9. Infiltration and transport sewer as claimed in any of the claims 1-8, **characterized in that** the vertical conduit part (8) comprises a metal pipe provided with perforations.

10. Infiltration and transport sewer as claimed in any of the claims 1-8, **characterized in that** the vertical conduit part (8) comprises a plastic pipe provided with perforations.

11. Infiltration and transport sewer as claimed in any of the claims 1-10, comprising an inspection well (1) which is formed by a reservoir formed by a bottom (2) and walls (3) standing from this bottom (2), wherein a passage opening (6) for a horizontal conduit part is provided in at least one of the walls (3), **characterized by** a passage opening (7) in the bottom (2) for a vertical conduit part (8).

12. Infiltration and transport sewer as claimed in claim 11, **characterized in that** the reservoir (1) is manufactured from concrete.

13. Infiltration and transport sewer as claimed in claim 11, **characterized in that** the reservoir (1) is manufactured from a plastic material.

14. Use of an infiltration and transport sewer according to any of the claims 1-13 for transporting water and infiltrating a first ground layer with at least a first part of the water transported through the at least one horizontal conduit part, and for infiltrating a second ground layer located lower than the first ground layer with at least a second part of the water transported through the horizontal part.

## Patentansprüche

1. Infiltrations- und Transportkanal, umfassend zumindest einen mit Perforationen ausgestatteten horizontalen Leitungsteil und zumindest einen vertikalen Leitungsteil (8), wobei der vertikale Leitungsteil (8) mit einem an dessen oberen Ende angeordneten Einlass (9) ausgestattet ist, welcher Einlass (9) durch eine sich vertikal erstreckende längliche Hülse (10) gebildet wird, die an ihrem unteren Ende mit dem vertikalen Leitungsteil (8) verbindbar ist, **dadurch gekennzeichnet, dass** die sich vertikal erstreckende längliche Hülse zumindest teilweise mit Perforationen (11) ausgestattet ist.

2. Infiltrations- und Transportkanal gemäß Anspruch 1, **dadurch gekennzeichnet, dass** ein gegenüber dem vertikalen Leitungsteil (8) proximaler Teil der Hülse (10) in Umfangsrichtung geschlossen ist.

3. Infiltrations- und Transportkanal gemäß einem der Ansprüche 1-2, **dadurch gekennzeichnet, dass** die Hülse (10) an ihrem oberen Ende mit einem sich von der Hülse (10) konisch ausweitenden Umfangsrand (12) ausgestattet ist.

4. Infiltrations- und Transportkanal gemäß einem der Ansprüche 1-3, **dadurch gekennzeichnet, dass** die Hülse (10) in Längsrichtung mit zumindest zwei sich zwischen dem ersten und dem zweiten Ende erstreckenden Verstärkungsrippen (13) ausgestattet ist.

5. Infiltrations- und Transportkanal gemäß Anspruch 4, **dadurch gekennzeichnet, dass** die Hülse (10) in Längsrichtung mit vier sich zwischen dem ersten und dem zweiten Ende erstreckenden Verstärkungsrippen (13) ausgestattet ist.

6. Infiltrations- und Transportkanal gemäß einem der Ansprüche 1-5, **dadurch gekennzeichnet, dass** die Hülse (10) aus einem Kunststoffmaterial gefertigt ist.

7. Infiltrations- und Transportkanal gemäß einem der Ansprüche 1-5, **dadurch gekennzeichnet, dass** die Hülse (10) aus Edelstahl gefertigt ist.

8. Infiltrations- und Transportkanal gemäß einem der Ansprüche 1-7, **dadurch gekennzeichnet, dass** der Einlass (9) in einem Behälter (1) aufgenommen ist, in dem der horizontale Leitungsteil mündet, welcher Behälter an seiner Unterseite (2) mit einer Durchlassöffnung (7) für den vertikalen Leitungsteil (8) ausgestattet ist.

9. Infiltrations- und Transportkanal gemäß einem der Ansprüche 1-8, **dadurch gekennzeichnet, dass** der vertikale Leitungsteil (8) ein mit Perforationen ausgestattetes Metallrohr umfasst.

10. Infiltrations- und Transportkanal gemäß einem der Ansprüche 1-8, **dadurch gekennzeichnet, dass** der vertikale Leitungsteil (8) ein mit Perforationen ausgestattetes Kunststoffrohr umfasst.

11. Infiltrations- und Transportkanal gemäß einem der Ansprüche 1-10, umfassend einen Inspektionsbrunnen (1), der durch einen Boden (2) und von diesem Boden (2) hochstehende Wände (3) ausgebildeten Behälter ausgebildet ist, wobei in zumindest einem der Wände (3) eine Durchlassöffnung (6) für einen horizontalen Leitungsteil bereitgestellt ist, **gekennzeichnet durch** eine Durchlassöffnung (7) in dem Boden (2) für einen vertikalen Leitungsteil (8).

12. Infiltrations- und Transportkanal gemäß Anspruch 11, **dadurch gekennzeichnet, dass** der Behälter (1) aus Beton gefertigt ist.

13. Infiltrations- und Transportkanal gemäß Anspruch 11, **dadurch gekennzeichnet, dass** der Behälter (1) aus einem Kunststoffmaterial gefertigt ist.

14. Gebrauch eines Infiltrations- und Transportkanals gemäß einem der Ansprüche 1-13 zum Transportieren von Wasser und Infiltrieren einer ersten Bodenschicht mit zumindest einem ersten Teil des durch den ersten horizontalen Leitungsteil transportierten Wassers, und zum Infiltrieren einer niedriger als die erste Bodenschicht gelegenen zweiten Bodenschicht mit zumindest einem zweiten Teil des durch den horizontalen Teil transportierten Wassers.

## Revendications

1. Egout d'infiltration et de transport, comprenant au moins une partie de conduite horizontale pourvue de perforations et au moins une partie de conduite verticale (8), dans lequel la partie de conduite verticale (8) est pourvue d'une partie d'entrée (9) placée sur l'extrémité extérieure supérieure de celle-ci, ladite partie d'entrée (9) étant formée par un manchon allongé s'étendant verticalement (10) qui peut être couplé à son extrémité inférieure à la partie de conduite verticale,
**caractérisé en ce que** ledit manchon allongé s'étendant verticalement (10) est au moins partiellement pourvu de perforations (11).

2. Egout d'infiltration et de transport selon la revendication 1, **caractérisé en ce qu'**une partie proximale du manchon (10) par rapport à la partie de conduite verticale (8) est fermée dans la direction périphérique.

3. Egout d'infiltration et de transport selon l'une quelconque des revendications 1 à 2, **caractérisé en ce que** le manchon (10) est pourvu à son extrémité supérieure d'un bord périphérique (12) qui s'élargit de façon conique à partir du manchon (10).

4. Egout d'infiltration et de transport selon l'une quelconque des revendications 1 à 3, **caractérisé en ce que** le manchon (10) est pourvu dans la direction longitudinale d'au moins deux nervures de renforcement (13) qui s'étendent entre la première et la seconde extrémités.

5. Egout d'infiltration et de transport selon la revendication 4, **caractérisé en ce que** le manchon (10) est pourvu dans la direction longitudinale de quatre nervures de renforcement (13) qui s'étendent entre la première et la seconde extrémités.

6. Egout d'infiltration et de transport selon l'une quelconque des revendications 1 à 5, **caractérisé en ce que** le manchon (10) est fabriqué à partir d'une matière plastique.

7. Egout d'infiltration et de transport selon l'une quelconque des revendications 1 à 5, **caractérisé en ce que** le manchon (10) est fabriqué à partir d'acier inoxydable.

8. Egout d'infiltration et de transport selon l'une quelconque des revendications 1 à 7, **caractérisé en ce que** la partie d'entrée (9) est reçue dans un réservoir (1) dans lequel la partie de conduite horizontale débouche, le réservoir étant pourvu sur son côté inférieur (2) d'une ouverture de passage (7) pour la partie de conduite verticale (8).

9. Egout d'infiltration et de transport selon l'une quelconque des revendications 1 à 8, **caractérisé en ce que** la partie de conduite verticale (8) comprend un tuyau métallique pourvu de perforations.

10. Egout d'infiltration et de transport selon l'une quelconque des revendications 1 à 8, **caractérisé en ce que** la partie de conduite verticale (8) comprend un tuyau de plastique pourvu de perforations.

11. Egout d'infiltration et de transport selon l'une quelconque des revendications 1 à 10, comprenant un puits d'inspection (1) qui est formé par un réservoir formé par un fond (2) et des parois (3) se dressant à partir de ce fond (2), dans lequel une ouverture de passage (6) pour une partie de conduite horizontale est prévue dans au moins une des parois (3), **caractérisé par** une ouverture de passage (7) dans le fond (2) pour une partie de conduite verticale (8).

12. Egout d'infiltration et de transport selon la revendication 11, **caractérisé en ce que** le réservoir (1) est fabriqué à partir de béton.

13. Egout d'infiltration et de transport selon la revendication 11, **caractérisé en ce que** le réservoir (1) est fabriqué à partir d'une matière plastique.

14. Utilisation d'un égout d'infiltration et de transport selon l'une quelconque de revendications 1 à 13 pour transporter de l'eau et infiltrer une première couche de sol avec au moins une première partie de l'eau transportée à travers ladite au moins une partie de conduite horizontale, et pour infiltrer une seconde couche de sol située plus bas que la première couche de sol avec au moins une seconde partie de l'eau transportée à travers la partie horizontale.
